(19) Europäisches Patentamt
European Patent Office
Office européen des brevets

(11) Veröffentlichungsnummer: **0 207 359 B1**

(12) **EUROPÄISCHE PATENTSCHRIFT**

(45) Veröffentlichungstag der Patentschrift: **13.03.91**

(51) Int. Cl.[5]: **C08L 69/00**, C08K 5/51, //(C08L69/00,25:02,27:18)

(21) Anmeldenummer: **86108235.2**

(22) Anmeldetag: **16.06.86**

Die Akte enthält technische Angaben, die nach dem Eingang der Anmeldung eingereicht wurden und die nicht in dieser Patentschrift enthalten sind.

# (54) Thermoplastische Formmassen mit flammwidrigen Eigenschaften.

(30) Priorität: **29.06.85 DE 3523316**

(43) Veröffentlichungstag der Anmeldung:
**07.01.87 Patentblatt 87/02**

(45) Bekanntmachung des Hinweises auf die Patenterteilung:
**13.03.91 Patentblatt 91/11**

(84) Benannte Vertragsstaaten:
**DE FR GB IT NL**

(56) Entgegenhaltungen:
**EP-A- 0 103 230**
**EP-A- 0 174 493**
**DE-B- 1 109 884**
**FR-A- 2 239 512**

(73) Patentinhaber: **BAYER AG**
**W-5090 Leverkusen 1 Bayerwerk(DE)**

(72) Erfinder: **Tödtemann, Gert**
**Neuenweg 5**
**W-5632 Wermelskirchen(DE)**
Erfinder: **Reinking, Klaus, Dr.**
**Robert-Stolz-Strasse 16 B**
**W-5632 Wermelskirchen(DE)**

**EP 0 207 359 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind thermoplastische Formmassen bestehend aus

A.) 40-95 Gew.-Teilen eines thermoplastischen, halogenfreien aromatischen Polycarbonats auf Basis der Diphenole der Formel II

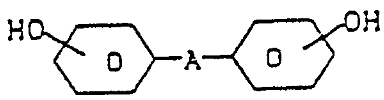

II

worin A eine Einfachbindung, ein $C_1$-$C_5$-Alkylen, ein $C_2$-$C_5$-Alkyliden, ein $C_5$-$C_6$-Cycloalkyliden, -S oder -$SO_2$- ist,

B.) 60 - 5 Gew.-Teilen eines haloenfreien Copolymerisats aus 50 - 100 Gew.-% Styrol, $\alpha$-Methylstyrol, kernalkylierten Styrolen oder Mischungen daraus, und 0-50 Gew.-% Acrylnitril,

c.) 5 - 15 Gew.-Teilen, bezogen auf 100 Teile Gesamtgewicht aus A.) + B.), einer halogenfreien Phosphorverbindung der Formel I

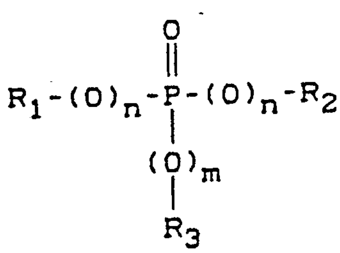

I,

worin $R_1$, $R_2$ und $R_3$ unabhängig voneinander ein $C_1$-$C_8$-Alkyl oder ein gegebenenfalls alkylsubstituiertes $C_6$-$C_{20}$-Aryl sind und entweder n = m = Null ist oder n = 1 und m Null oder 1 ist, und

D.) 0,05-5 Gew.-Teile, vorzugsweise 0,1-1 Gew.-Teile, bezogen wiederum auf 100 Gew.-Teile Gesamtgewicht aus A.) + B.), eines Tetrafluorethylenpolymerisats

Geeignete Diphenole der Formel II sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-cyclohexan.

Bevorzugte Diphenole der Formel II sind 2,2-Bis-(4-hydroxyphenyl)-propan und 1,1-Bis-(4-hydroxyphenyl)-cyclohexan.

Die Diphenole der Formel II sind entweder literaturbekannt oder nach literaturbekannten Verfahren herstellbar,

Die Herstellung der erfindungsgemäß geeigneten Polycarbonate gemäß Komponente A.) ist literaturbekannt und kann beispielsweise mit Phosgen nach dem Phasengrenzflächen-verfahren oder mit Phosgen nach dem Verfahren in homogener Phase (dem sogenannten Pyridin-Verfahren) erfolgen, wobei das jeweils einzustellende Molekulargewicht in bekannter Weise durch eine entsprechende Menge an bekannten Kettenabbrechern erzielt wird,

Die erfindungsgemäß geeigneten Polycarbonate gemäß Komponente A,) haben mittlere Gewichtsmolekulargewichte ($\overline{M}$ w, gemessen beispielsweise durch Ultrazentrifugation oder durch Streulichtmessung) von 10 000 bis 100 000, vorzugsweise von 20 000 bis 80 000.

Die erfindungsgemäß geeigneten Polycarbonate gemäß Komponente A.) sind sowohl Homopolycarbonate als auch Copolycarbonate.

Die erfindungsgemäß geeigneten Polycarbonate gemäß Komponente h.) können in bekannter Weise verzweigt sein, und zwar vorzugsweise durch den Einbau von 0,05 bis 2,0 Mol-%, bezogen auf die Summe der eingesetzten Mole Diphenole, an drei- oder mehr als dreifunktionellen Verbindungen, beispielsweise solchen mit drei oder mehr als drei phenolischen OH-Gruppen.

Halogenfreie Polycarbonate im Sinne der vorliegenden Erfindung bedeutet, daß die Polycarbonate aus halogenfreien Diphenolen, halogenfreien Kettenabbrechern und gegebenenfalls aus halogenfreien Verzweigern aufgebaut sind, wobei der Gehalt an untergeordneten ppm-Mengen an verseifbarem Chlor, resultierend beispielsweise aus der Herstellung des Polycarbonats mit Phosgen nach dem Phasengrenzflächenverfahren, nicht als halogenhaltig im Sinne der Erfindung anzusehen ist. Derartige

Polycarbonate mit ppm-Gehalten an verseifbarem Chlor sind halogenfreie Polycarbonate im Sinne der vorliegenden Erfindung.

Erfindungsgemäß geeignete halogenfreie thermoplastische Formmassen gemäß Komponente B.) sind Homopolymerisate des Styrols und/oder Copolymerisate des Styrols mit Acrylnitril. Letztere enthalten einpolymerisiert 50-95 Gew.-%, vorzugsweise 70-90 Gew.-% Styrol und/oder alkylsubstituierte Styrole mit 1-4 C-Atomen im Alkylrest, und 5-50 Gew.−%, vorzugsweise 10-30 Gew.-% Acrylnitril. Der Styrolbestandteil kann, insbesondere um die Wärmeformbeständigkeit zu verbessern, ganz oder teilweise durch p-Methylstyrol oder α-Methylstyrol ersetzt werden. Polystyrol und die Styrol-Acrylnitril-Copolymeren sind im Handel erhältlich oder können nach bekannten Verfahren (s.u.a. H. Ohlinger, "Polystyrol", Springer Verlag 1953, DE-AS 10 01 001 bzw. DE-AS 10 03 436) hergestellt werden. Ihr Molekulargewicht $\overline{M}$ w (Gewichtsmittel aus Lichtstreuung) liegt zwischen $1 \cdot 10^5$ und $3 \cdot 10^5$.

Die erfindungsgemäß geeigneten halogenfreien Phosphorverbindungen gemäß Komponente C.) sind generell bekannt (s. beispielsweise Ullmann, Enzyklopädie der technischen Chemie, Bd. 18, S. 301 ff., 1979; Houben-Weyl, Meth. der org. Chemie, Bd 12/1, S. 43, S. 136; Beilstein, Bd. 6, S. 177).

Erfindungsgemäß geeignete Phosphorverbindungen gemäß Komponente C.) Formel 1, sind beispielsweise Triphenylphosphat, Trikresylphosphat, Diphenyl-2-ethylkresylphosphat, Tri-(isopropylphenyl)-phosphat, Methanphosphonsäure-diphenylester, Phenylphosphonsäure-diethylester, Triphenylphosphinoxid oder Trikresylphosphinoxid,

Die erfindungsgemäß geeigneten Tetrafluorethylenpolymerisate gemäß Komponente D.) sind Polymere mit Fluorgehalten von 65-76 Gew.-%, vorzugsweise 70-76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer.

Diese Polymerisatee sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7 bis 70 $kg/cm^2$ und bei Temperaturen von 0 bis 200 °C, vorzugsweise bei Temperaturen von 20 bis 100 °C. (Bezüglich der Polymerisation von Tetrafluorethylen siehe auch US-Patent 2 393 967 und US-Patent 2 534 058). Die aus so hergestellten Suspensionen, Dispersionen oder Emulsionen durch Koagulation oder durch Fällung und gegebenenfalls durch anschließendes Mahlen erhaltenen Polytetrafluorethylen-Pulver besitzen durchschnittliche Korngrößen zwischen 2 und 800 µm. Ein geeignetes Polytetrafluorethylen ist Hostaflon TF 2026 der Fa. Hoechst.

Teflonhaltige Thermoplaste, wie Polycarbonate oder Polystyrole oder Polymere von Acrylnitril sind bekannt (siehe beispielsweise US-Patente 3 005 795 und 3 294 871). GB-PS 1 S9 648 beschreibt flammwidrige, nichttropfende Polymere, beispielsweise aus Polystyrol oder aus Polycarbonaten, denen ein Flammschutzadditiv, wie beispielsweise Triphenylphosphat, ein nicht-brennbares Fasermaterial und Polytetrafluorethylenharz zugemischt worden sind. Das Beispiel 2 des GB-PS 1 459 648 zeigt, daß Polytetrafluorethylenharz ohne Faserzusatz nicht das Tropfen verhindert.

Aus der DE-0S 2 434 085 sind verschäumbare thermoplastische Kunststoffe bekannt, wobei als Thermoplasten unter anderen Polycarbonate, Polymerisate oder Mischungen davon genannt sind. Als Polymere sind Polystyrole und Styrolacrylnitrilcopolymere genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Gemäß DE-0S 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, die gemäß der auf Seite 9 der DE-OS 2 921 325 zitierten US-Patentschrift 3 392 136 auch Polyvinylidenfluoride sein können Den Polycarbonaten können ABS-Copolymerisate zugemischt sein.

Aus US-PS 4 355 126 und 4 107 232 sind flammwidrige ABS-Polymerisate und flammwidrige Gemische aus Polyphenylenetherharzen mit polymeren Vinylaromaten bekannt, die Polytetrafluorethylene enthalten. Als Flammschutzmittel ist Triphenylphosphat besonders bevorzugt.

Aus der DE-0S 2 903 100 sind flammwidrige Mischungen aus Polycarbonaten und ABS-Polymerisaten bekannt, die spezielle organische Sulfonate und fluorierte Polyolefine enthalten können.

Aus der EP-OS 0 103 230 sind flammwidrige Polymermischungen von speziellen Polycarbonaten, Styrolpolymerisaten und Polyphosphaten mit Molekulargewichten $\overline{M}$ w von 1600 bis 150 000 bekannt, die Polytetrafluorethylen enthalten können Die Polycarbonate dieser Formmassen sind jedoch überwiegend aus tetramethylierten Diphenolen aufgebaut.

Aus der DE-OS 3 322 260 sind flammwidrige thermoplastische Formmassen bekannt, die

(a) aromatische Polycarbonate,

(b) SAN-Pfropfpolymerisate,

(c) thermoplastische Polymerisate,
(d) gegebenenfalls Halogenverbindungen,
(e) Antimontrioxid, Antimoncarbonat, Wismuttrioxid oder Wismutcarbonat und
(f) feinteiliges Tetrafluorethylenpolymerisat enthalten, wobei dieses über eine wäßrige Emulsion des SAN-Pfropfpolymerisats (b) und gegebenenfalls eine wäßrige Emulsion des thermoplastischen Polymerisats (c) in die Formmasse eingebracht wird, wodurch gute Oberflächen der Formmassen erzielt werden.

Die erfindungsgemäßen thermoplastischen Formmassen können weitere für Polycarbonate oder für Homo- und/oder Copolymere des Styrols bekannte Zusätze wie Stabilisatoren, Pigmente, Fließmittel, Entformungsmittel und/oder Antistatika enthalten.

Die erfindungsgemäßen thermoplastischen Formmassen, bestehend aus den Komponenten A.), B.), C.) und D.) und gegebenenfalls weiteren bekannten Zusätzen wie Stabilisatoren, Pigmenten, Fließmitteln, Entformungsmitteln und/oder Antistatika werden hergestellt, indem man die jeweiligen Bestandteile in bekannter Weise vermischt und danach bei Temperaturen von 220 bis 330° C in üblichen Aggregaten wie Innenknetern oder Ein- oder Zweischneckenextrudern schmelzcompoundiert oder schmelzextrudiert, oder indem man die Lösungen bzw. Suspensionen der jeweiligen Komponenten in geeigneten organischen Lösungsmitteln, beispielsweise Chlorbenzol, mischt und diese Gemische in üblichen Eindampfaggregaten, beispielsweise in Eindampfextrudern, eindampft.

Gegenstand der vorliegenden Erfindung ist somit auch ein Verfahren zur Herstellung von thermoplastischen Formmassen bestehend aus den Komponenten A.), B.), C.) und D.) sowie gegebenenfalls Stabilisatoren, Pigmenten, Fließmitteln, Entformungsmitteln und/oder Antistatika, das dadurch gekennzeichnet ist, daß man die Komponenten A.), B.), C.) und D.) sowie gegebenenfalls Stabilisatoren, Pigmente, Fließmittel, Entformungsmittel und/oder Antistatika in bekannter Weise vermischt und danach bei Temperaturen von 220 bis 330° C in gebräuchlichen Aggregaten schmelzcoumpoundiert oder schmelzextrudiert, oder daß man die Lösungen oder Suspensionen dieser Komponenten in geeigneten organischen Lösungsmitteln mischt und diese Gemische in gebräuchlichen Eindampfaggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstelelung von Formkörpern durch Tiefziehen oder Warmverformen zuvor durch Extrusion hergestellter Platten oder Folien.

## Beispiele

Eingesetzte Legierungskomponenten:

A.) Polycarbonat aus 2,2-Bis-(4-hydroxyphenyl)-propan (Bisphenol A) mit einer relativen Lösungsviskosität von 1,320, gemessen in Methylenchlorid bei 23° C und einer Konzentration von 0,5 Gew.-%.
B. 1.) Polystyrol. Mittleres Molekulargewicht $\overline{M}$ w = 250 000.
B.2.) Styrol-Acrylnitril-Copolymerisat. Acrylnitril-Gehalt = 10 Gew.-%. Mittleres Molekulargewicht $\overline{M}$ w = 200 000.
B.3.) Styrol-Acrylnitril-Copolymerisat. Acrylnitril-Gehalt = 28 Gew.-%. Mittleres Molekulargewicht $\overline{M}$ w = 180 000.
C.1.) Diphenyl-kresylphosphat
C.2.) Triphenylphosphat
C.3.) Triphenylphosphinoxid
C.4.) Methylphosphonsäure-diphenylester
D.) Tetrafluorethylenpolymerisat in Pulverform mit einer Teilchengröße von 500 bis 650 µm und einer Dichte von 2,18 bis 2,20 g/cm² der Firma Hoechst (Hostaflon TF 2026).

Die Compoundierung der Komponenten A.), B 1-3), C 1-4) und D.) erfolgte auf einem Zweischneckenextruder (ZSK 32 der Fa. Werner & Pfleiderer) bei Temperaturen zwischen 220 und 250° C.

Die Herstellung der Formkörper erfolgte auf einer Spritzgießmaschine bei 250° C.

Das Brandverhalten der Proben wurde nach UL-Subj. 94 V in Prüfkörperdicken von 1,6 und 3,2 mm gemessen. Der UL 94 V-Test wird wie folgt durchgeführt:

Substanzproben werden zu Stäben der Abmessungen 127 x 12,7 x 1,6 mm bzw. 127 x 12,7 x 3,2 mm

geformt. Die Stäbe werden vertikal so montiert, daß die Unterseite des Probekörpers sich 305 mm über einen Streifen Verbandsstoff befindet. Jeder Probestab wird einzeln mittels zweier aufeinanderfolgender Zündvorgänge von 10 sec Dauer entzündet. Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von 3,73 x $10^4$ kJ/$m^3$ (1,000 BTU per cubic foot) benutzt.

Die UL 94 V-O-Klassifizierung umfaßt die nachstehend beschriebenen Eigenschaften von Materialien, die gemäß der UL 94 - Vorschrift geprüft werden. Die Materialien in dieser Klasse enthalten keine Proben, die länger als 10 sec nach jeder Einwirkung der Testflamme brennen; sie zeigen keine Gesamtflammzeit von mehr als 50 sec bei der zweimaligen Flammeinwirkung auf jedem Probensatz; sie enthalten keine Proben, die vollständig bis hinauf zu der am oberen Ende der Probe befestigten Halteklammer abbrennen; sie weisen keine Proben auf, die die unterhalb der Probe angeordneten Watte durch brennende Tropfen oder Teilchen entzünden; sie enthalten auch keine Proben, die länger als 30 sec nach Entfernung der Testflamme glimmen.

Andere UL-Klassifizierungen bezeichnen Proben, die eine längere Nachbrennzeit aufweisen (Klassifizierung V-1) oder die außerdem brenndende Tropfen oder Teilchen abgeben, die die unterhalb der Probe angeordnete Watte entzünden (Klassifizierung V-2). Die Klassifizierung n.b. heißt "nicht bestanden" und bedeutet, daß die Proben eine Nachbrennzeit von & 30 sec aufweisen.

Aus der folgenden Tabelle können die genauen Zusammensetzungen der geprüften Formmassen sowie die erhaltenen UL 94 - Klassifizierungen entnommen werden.

| | A G.-Tle. | B 1 G.-Tle. | B 2 G.-Tle. | B 3 G.-Tle. | C 1 G.-Tle. | C 2 G.-Tle. | C 3 G.-Tle. | C 4 G.-Tle. | D G.-Tle | UL 94 (1,6 mm) | Ul 94 (3,2 mm) |
|---|---|---|---|---|---|---|---|---|---|---|---|
| | Vergleichsversuche | | | | | | | | | | |
| V 1 | 75 | 25 | | | | | | | | n.b. | n.b. |
| V 2 | 80 | 20 | | | | | | | | n.b. | n.b. |
| V 3 | 75 | | 25 | | | | | | | n.b. | n.b. |
| V 4 | 80 | | 20 | | | | | | | n.b. | n.b. |
| V 5 | 75 | | | 25 | | | | | | n.b. | n.b. |
| V 6 | 80 | | | 20 | | | | | | n.b. | |
| | Versuche gemäß der vorliegenden Erfindung | | | | | | | | | | |
| E 1 | 75 | 25 | | | 10 | | | | 0,25 | V-1 | V-0 |
| E 2 | 80 | 20 | | | 10 | | | | 0,25 | V-0 | V-0 |
| E 3 | 75 | | 25 | | 10 | | | | 0,2 | V-2 | V-0 |
| E 4 | 75 | | | 25 | 10 | | | | 0,2 | V-1 | V-0 |
| E 5 | 80 | | 20 | | 10 | | | | 0,25 | V-0 | V-0 |
| E 6 | 80 | | | 20 | 10 | | | | 0,2 | V-0 | V-0 |

| | A G.-Tle. | B 1 G.-Tle. | B 2 G.-Tle. | B 3 G.-Tle. | C 1 G.-Tle. | C 2 G.-Tle. | C 3 G.-Tle. | C 4 G.-Tle. | D G.-Tle | UL 94 (1,6 mm) | Ul 94 (3,2 mm) |
|---|---|---|---|---|---|---|---|---|---|---|---|
| E 7 | 75 | | 25 | | | 10 | | | 0,3 | V-1 | V-0 |
| E 8 | 75 | | | 25 | | 10 | | | 0,25 | V-1 | V-0 |
| E 9 | 80 | | 20 | | | 10 | | | 0,25 | V-0 | V-0 |
| E 10 | 80 | | 20 | | | | 10 | | 0,3 | V-0 | V-0 |
| E 11 | 80 | | | 20 | | | 7,5 | | 0,25 | V-2 | V-0 |
| E 12 | 80 | | 20 | | | | | 10 | 0,25 | V-0 | V-0 |

## Ansprüche

1. Thermoplastische Formmassen bestehend aus
   A.) 40 -95 Gew.-Teilen eines thermoplastischen, halogenfreien aromatischen Polycarbonats auf Basis der Diphenole der Formel II

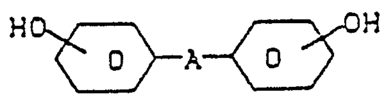

II

worin A eine Einfachbindung, ein $C_1$-$C_5$-Alkylen, ein $C_2$-$C_5$-Alkyliden, ein $C_5$-$C_6$-Cycloalkyliden, -S oder -$SO_2$- ist,
B.) 60 - 5 Gew.-Teilen eines halogenfreien Copolymerisats aus 50 - 100 Gew.-% Styrol, α-Methylstyrol, kernalkylierten Styrolen oder Mischungen daraus, und 0-50 Gew.-% Acrylnitril,
C.) 5 - 15 Gew.-Teilen, bezogen auf 100 Teile Gesamtgewicht aus A.) + B.), einer halogenfreien Phosphorverbindung der Formel I

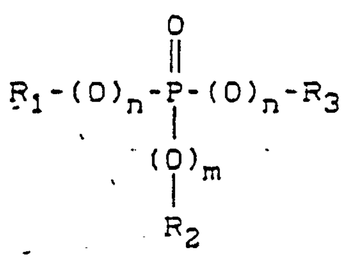

I,

worin $R_1$,$R_2$ und $R_3$ unabhängig voneinander ein $C_1$-$C_8$-Alkyl oder ein gegebenenfalls alkylsubsituiertes $C_6$-$C_{20}$-Aryl sind und entweder n = m = Null ist oder n = 1 und m = Null oder 1 ist, und
D.) 0,05 - 5 Gew.-Teile, bezogen wiederum auf 100 Teile Gesamtgewicht aus A.) + B.), eines Tetrafluorethylenpolymerisats mit einem Fluorgehalt von 65 - 76 Gew.-%.

2. Formmassen gemäß Anspruch 1, bestehend aus den Komponenten A.), B.), C.) und D.) und zusätzlich mindestens einem Zusatz, ausgezählt aus der Gruppe der Stabilisatoren, Pigmente, Fließmittel, Entformungsmittel und Antistatika.

3. Verfahren zur Herstellung der Formmassen des Anspruchs 1, dadurch gekennzeichnet, daß man die Komponenten A.), B.), C.) und D.) in bekannter Weise vermischt und danach bei Temperaturen von 220 °C bis 330 °C in gebräuchlichen Aggregaten schmelzcompoundiert oder schmelzextrudiert.

4. Verfahren zur Herstellung der Formmassen des Anspruchs 1, dadurch gekennzeichnet, daß man Lösungen der Komponenten A.), B.) und C.) und Dispersionen der Komponente D.) in geeigneten organischen Lösungsmitteln mischt und diese Gemische dann in gebräuchlichen Eindampfaggregaten eindampft.

5. Verfahren gemäß den Ansprüchen 3 und 4 zur Herstellung der Formmassen des Anspruchs 2, dadurch gekennzeichnet, daß man mindestens einen Zusatz, ausgewählt aus der Gruppe der Stabilisatoren, Pigmente, Fließmittel, Entformungsmittel und Antistatika, einbezieht,

## Claims

1. Thermoplastic moulding compounds consisting of

A.) 40 to 95 parts by weight of a thermoplastic halogen-free aromatic polycarbonate based on diphenols corresponding to formula II

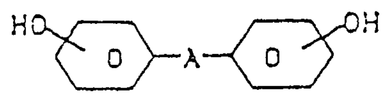

II

in which A is a single bond, a $C_{1-5}$ alkylene, a $C_{2-5}$ alkylidene, a $C_{5-6}$ cycloalkylidene, -S or $-SO_2-$,
B.) 60 to 5 parts by weight of a halogen-free copolymer of 50 to 100% by weight styrene, α-methyl styrene, nucleus-alkylated styrenes or mixtures thereof and 0 to 50% by weight acrylonitrile,
C.) 5 to 15 parts by weight, based on 100 parts total weight of A.) + B.), of a halogen-free phosphorus compound corresponding to formula I

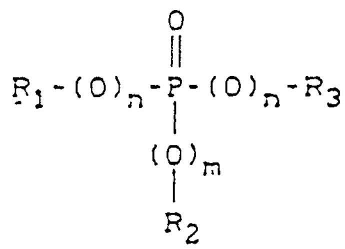

I,

in which $R_1$, $R_2$ and $R_3$ independently of one another represent a $C_{1-8}$ alkyl or an optionally alkyl-substituted $C_{6-20}$ aryl and either n = m = 0 or n = 1 and m = 0 or 1, and
D.) 0.05 to 5 parts by weight, again based on 100 parts total weight of A.) + B.), of a tetrafluoroethylene polymer having a fluorine content of 65 to 76% by weight.

**2.** Moulding compounds as claimed in claim 1 consisting of the components A.), B.), C.) and D.) and also at least one additive selected from the group consisting of stabilizers, pigments, flow aids, mould release agents and antistatic agents.

**3.** A process for the production of the moulding compounds claimed in claim 1, characterized in that components A.), B.), C.) and D.) are mixed in known manner and the resulting mixture is melt-compounded or melt-extruded in standard machines at temperatures of 220 °C to 330 °C.

**4.** A process for the production of the moulding compounds as claimed in claim 1, characterized in that solutions of components A.), B.) and C.) and dispersions of component D.) in suitable solvents are mixed and the resulting mixtures are concentrated by evaporation in standard evaporation units.

**5.** A-process as claimed in claims 3 and 4 for the production of the moulding compounds claimed in claim 2, characterized in that at least one additive selected from the group consisting of stabilizers, pigments, flow aids, mould release agents and antistatic agents is incorporated.

## Revendications

**1.** Compositions thermoplastiques à mouler, constituées de
A) 40 à 95 parties en poids d'un polycarbonate aromatique thermoplastique non halogéné à base des diphénols de formule II

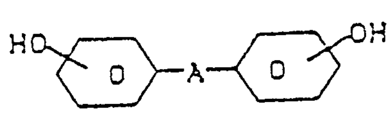

II

dans laquelle A désigne une liaison simple, un groupe alkylène en $C_1$ à $C_5$, alkylidène en $C_2$ à $C_5$,

cycloalkylidène en $C_5$ ou $C_6$, -S ou $-SO_2-$,

B) 60 à 5 parties en poids d'un copolymérisat non halogéné de 50 à 100 parties en poids de styrène, d'α-méthylstyrène, de styrènes alkylés sur le noyau ou de mélanges qui en sont formés, et de 0 à 50 % d'acrylonitrile,

C) 5 à 15 parties en poids, pour 100 parties en poids du total de A) + B), d'un composé phosphoré non halogéné de formule I

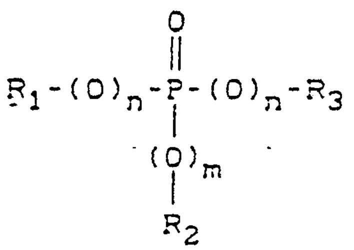

I,

dans laquelle $R_1$, $R_2$ et $R_3$ représentent indépendamment les uns des autres un groupe alkyle en $C_1$ à $C_8$ ou un groupe aryle en $C_6$ à $C_{20}$ portant éventuellement un substituant alkyle et ou bien n et m sont égaux à 0, ou bien n est égal à 1 et m est égal à 0 ou à 1, et

D) 0,05 à 5 parties en poids, là encore pour 100 parties en poids du total de A) + B), d'un polymère de tétrafluoréthylène ayant une teneur en fluor de 65 à 76 % en poids.

**2.** Compositions à mouler suivant la revendication 1, constituées des composants A), B), C) et D) et en outre d'au moins un additif choisi dans le groupe des agents stabilisants, des pigments, des agents modifiant l'écoulement, des agents de démoulage et des antistatiques.

**3.** Procédé de production des compositions a mouler suivant la revendication I, caractérisé en ce qu'on mélange d'une manière connue les composants A), B), C) et D) puis on formule le mélange à l'état fondu ou on l'extrude à l'état fondu à des températures de 220 à 330° C dans des appareils classiques.

**4.** Procédé de production des compositions à mouler suivant la revendication 1, caractérisé en ce qu'on mélange des solutions des composants A), B) et C) et des dispersions du composant D) dans des solvants organiques appropriés et on concentre ensuite ces mélanges par évaporation dans des appareils classiques appropriés.

**5.** Procédé suivant les revendications 3 et 4 pour la production des compositions à mouler suivant la revendication 2, caractérisé en ce qu'on incorpore au moins un additif choisi dans le groupe des agents stabilisants, des pigments, des agents modifiant l'écoulement, des agents de démoulage et des antistatiques.